# EUROPÄISCHE PATENTANMELDUNG

(11) **EP 3 722 910 A1**
(43) Veröffentlichungstag der Anmeldung: **14.10.2020**
(21) Anmeldenummer: 20164807.8
(22) Anmeldetag: 23.03.2020
(51) Int. Cl.: G05D 1/02, G01C 1/00, G01C 21/00

(54) **VERFAHREN ZUR OPTIMIERTEN SIMULTANEN LOKALISIERUNG UND KARTIERUNG EINES MOBILEN ROBOTERS**

(30) Priorität: 29.03.2019 DE 102019204410
(71) Anmelder: Robert Bosch GmbH, 70442 Stuttgart (DE)
(72) Erfinder: Von Collani, Yorck, 71717 Beilstein (DE); Scherer, Torsten, 72076 Tuebingen (DE); Ferch, Markus, 71717 Beilstein (DE); Haug, Florian, 71254 Ditzingen (DE); Grundmann, Thilo, 71642 Ludwigsburg (DE); Yuen-Wille, Sheung Ying, 71229 Leonberg (DE); Leibold, Stefan, 74388 Talheim (DE)

(57) **Zusammenfassung**

Bei einem Verfahren zur simultanen Lokalisierung und Kartierung eines mobilen Roboters ist ein Optimierungsschritt durch Ausgleichstransformationen bei der Detektion von bereits kartierten Strukturen vorgesehen. Hierbei wird eine Ausgleichstransformation (3) bei der Kartierung auf der Basis einer Identifizierung wenigstens eines ortsfesten Markers (12) durchgeführt, indem bei einer bereits vorhandenen Position des wenigstens einen ortsfesten Markers (12) aus einer vorangegangenen Kartierung und bei einer Abweichung (120) der Position des wenigstens einen ortsfesten Markers bei einer aktuellen Kartierung die Ausgleichstransformation (3) erfolgt.

## Beschreibung

Die vorliegende Erfindung betrifft ein Verfahren zur simultanen Lokalisierung und Kartierung eines mobilen Roboters, wobei die simultane Lokalisierung und Kartierung einen Optimierungsschritt durch Ausgleichstransformationen bei der Detektion von bereits kartierten Strukturen umfasst. Weiterhin betrifft die Erfindung ein Computerprogramm zur Durchführung des Verfahrens sowie ein entsprechendes maschinenlesbares Speichermedium und ein elektronisches Steuergerät.

### Stand der Technik

Im Bereich der mobilen Robotik ist es bekannt, dass ein mobiler Roboter eine Karte seiner Umgebung erstellt und gleichzeitig seine Position innerhalb dieser Karte schätzt. Für diese simultane Lokalisierung und Kartierung (*simultaneous localization and mapping* - SLAM) werden Algorithmen verwendet, die die Position des autonomen Roboters relativ zu seiner Umgebung bestimmen. Dabei wird auf der Basis einer On-Board-Sensorik des mobilen Roboters eine Umgebungsrepräsentation, also eine Karte, erstellt, die die im Rahmen der durch die vorhandenen Sensoren, wie zum Beispiel Laserscanner, Kamera, Radar, Ultraschall oder anderes, erfassbaren physikalischen Eigenschaften der Umgebung einbezieht. Diese sogenannten SLAM-Algorithmen kommen bereits auch außerhalb des Bereichs der mobilen Robotik zum Einsatz, beispielsweise in solchen Anwendungsbereichen, die sich mit unbemannten Flugzeugen (Drohnen), autonomen Kraftfahrzeugen, automatisierten Flurförderzeugen und anderem befassen.

Im Allgemeinen gliedert sich der SLAM-Prozess in vier Stufen:
a. Ausgehend von der vorherigen Position des Roboters in der bereits erstellten Karte und den in der Karte hinterlegten Sensorwerten wird gegebenenfalls unter Zuhilfenahme weiterer Sensorik die relative Positionsänderung des Roboters geschätzt. Zu Beginn des Prozesses kann dabei von einer Initialposition des Roboters ausgegangen werden, wobei zu Beginn des Prozesses ein einzelner initialer Satz von Sensorwerten vorliegen kann. Die weitere Sensorik, die für die Schätzung der relativen Positionsänderung eingesetzt werden kann, kann beispielsweise auf der Basis einer inertialen Messeinheit (IMU), einer Radodometrie, eines optischen Flusses und ähnlichem erfolgen.
b. Basierend auf dieser Schätzposition werden die aktuellen Sensorwerte mit den in der Karte hinterlegten Sensorwerten verglichen und auf eine mögliche örtliche Übereinstimmung überprüft (*matching*)*.* Hierbei ist es das Ziel, eine möglichst hohe Übereinstimmung von in der Karte hinterlegten, bereits beobachteten Umgebungsmerkmalen und den im aktuellen Sensorwertset ebenfalls erfassten Umgebungsmerkmalen zu erreichen. Am Punkt der maximalen Übereinstimmung werden die aktuellen Sensorwerte gewissermaßen nahtlos in die Karte eingefügt (*mapping*)*.*
c. Ausgehend von diesem Einfügepunkt in der Karte wird anschließend die aktuelle Fahrzeugposition relativ zur Karte korrigiert (*localization*)*.* Diese Position kann dann für die nächste Iteration als Ausgangsposition (neue Initialposition) verwendet werden.
d. In einem optionalen Optimierungsschritt wird untersucht, ob zusätzliche Korrespondenzen der aktuellen Sensorwerte zu anderen Kartenbereichen gefunden werden können. Findet sich ein im aktuellen Sensorwerteset beobachtetes Umgebungsmerkmal an anderer Stelle in der Karte wieder, wird auch hier ein *matching* durchgeführt. Genügt dieser *match* einem gewissen Qualitätskriterium, wird mittels eines Optimierungsalgorithmus beziehungsweise einer Ausgleichstransformation die örtliche Differenz der beiden Positionen über alle Einfügepunkte der in der Karte enthaltenen Sensorwertesets ausgeglichen, sodass die Sensorwerte, die ein und dasselbe Umgebungsmerkmal beschreiben, räumlich zueinander passen. Dieser Schritt wird auch als *Loop-Closure* bezeichnet.

### Offenbarung der Erfindung

### Vorteile der Erfindung

Die vorliegende Erfindung schlägt ein Verfahren zur simultanen Lokalisierung und Kartierung eines mobilen Roboters vor, wobei ein Optimierungsschritt durch Ausgleichstransformationen bei der Detektion von bereits kartierten Strukturen durchgeführt wird. Das vorgeschlagene Verfahren erlaubt dabei eine wesentlich einfachere und robustere Erkennung und Behandlung von *Loop-Closures,* die in Rechenzeit-optimierter Weise durchgeführt werden können. Kern des Verfahrens ist, dass die Ausgleichstransformation bei der Kartierung auf der Basis einer Identifizierung wenigstens eines ortsfesten Markers durchgeführt wird, indem bei einer bereits vorhandenen Position des wenigstens einen ortsfesten Markers aus einer vorangegangenen Kartierung bei einer Abweichung der Position des wenigstens einen ortsfesten Markers bei einer aktuellen Kartierung die Ausgleichstransformation erfolgt. Durch den Einbezug eines Marker-Detektionssystems in das SLAM-Verfahren sind eine Augmentierung der *Loop-Closure*-Erkennung und ein besonders robuster Kartenbau möglich. Die Anforderung an das Marker-Detektionssystem ist hierbei lediglich, dass das Detektionssystem in der Lage ist, einen ortsfesten Marker eindeutig zu identifizieren und dessen Position relativ zum Roboter zu ermitteln. Insofern kann zu diesem Zweck im Prinzip jede Form eines aktiven oder passiven Markersystems genutzt werden, welches eine Signatur oder eine andere Eigenschaft eines Markers eindeutig identifizieren kann und auf dieser Basis die Ableitung einer relativen, wiederholbaren Positionsinformation für den Roboter erlaubt. Auf der Basis der eindeutigen Identifizierbarkeit des oder gegebenenfalls der Marker durch das Detektionssystem und den daraus gewonnenen Positionsinformationen können die jeweiligen Markerpositionen während des SLAM-Prozesses in der Karte annotiert werden. Sobald ein Marker detektiert wird, welcher bereits in der Karte hinterlegt ist, kann anhand der aktuellen, relativen Roboterposition zum Marker eine entsprechende Ausgleichstransformation, also ein Loop-*Closure,* durchgeführt werden, wenn die aktuelle Position des Markers von einer bereits kartierten Position abweicht.

Der Ausdruck *"Loop-Closure"* wird nachfolgend in dem Sinne verwendet, dass bei örtlichen Differenzen von Positionen bei der aktuellen Kartierung in Bezug zu Positionen aus vorangegangenen Kartierungen eine Ausgleichstransformation durchgeführt wird.

Allgemein hat die Durchführung von derartigen Ausgleichstransformationen beziehungsweise *Loop-Closures* den Vorteil, dass aus der Sicht des Roboters überprüft werden kann, ob er an der jeweiligen Stelle bereits schon einmal war und diesen Teil der Umgebung schon einmal gewissermaßen gesehen hat. Wenn dies der Fall ist, wird aus Sicht des Roboters überprüft, ob die Informationen aus der bereits vorhandenen Kartierung mit diesen Informationen übereinstimmen. In einem perfekten System mit einer perfekten Positionsschätzung wäre eine solche Überprüfung und Optimierung nicht erforderlich, da in einem perfekten System die Roboterposition in der Karte immer der Roboterposition in der realen Umgebung entsprechen würde. In einem realen System liegen jedoch verschiedene Fehlerquellen vor (z. B. Drift in der inertialen Messeinheit, ein Schlupf der Radodometrie, Sensorrauschen, Diskretisierungsfehler beim *matching* usw.), sodass die Summe der verschiedenen Fehlerquellen zu einer Drift in der Roboterposition und einer Verzerrung der Karte führen. Die in realen Systemen zu beobachtende Drift der Roboterposition und die Verzerrung der Karte kann im schlimmsten Fall beispielsweise dazu führen, dass bei einem geschlossenen Kreis oder einem geschlossenen Viereck als Bewegungspfad des Roboters, beispielsweise bei einem entsprechend verlaufenden Gang, der Endpunkt des Ganges nicht mit dem Anfangspunkt zusammentrifft. Für die Funktionalität des SLAM-Prozesses ist es daher wichtig, dass der Endpunkt der Kartierung, welcher zugleich den Anfangspunkt der Kartierung darstellt, auch als solcher erkannt wird und dass gegebenenfalls entsprechende Ausgleichstransformationen als *Loop-Closures* durchgeführt werden. Herkömmliche Systeme basieren darauf, dass aus den vorliegenden Sensordaten Merkmale extrahiert werden und dass diese Merkmale mit denen in der Karte gespeicherten Daten abgeglichen werden. Hierfür ist allerdings ein erheblicher Rechenaufwand erforderlich, weshalb herkömmliche SLAM-Systeme mit entsprechend performanter Hardware ausgestattet sein müssen. Andernfalls kann der SLAM-Prozess nicht in Echtzeit ausgeführt werden. Das vorgeschlagene Verfahren kommt mit erheblich weniger Rechenaufwand aus, da es sich auf die Identifizierung eines ortsfesten Markers bezieht. Die Anforderungen an die Hardware bei der Durchführung des vorgeschlagenen Verfahrens sind daher deutlich geringer als bei herkömmlichen Verfahren.

Zudem hat das vorgeschlagene Verfahren den Vorteil, dass keine falsch-positiven Ergebnisse bei der Erkennung von *Loop-Closures* auftreten können. Dieses Problem tritt bei herkömmlichen Verfahren relativ häufig auf, da insbesondere in künstlichen Umgebungen, wie Gebäuden, oftmals identische Gänge oder Gebäudeflügel vorliegen, sodass anhand der Sensordaten keine eindeutige Aussage über die aktuelle Fahrzeugposition getroffen werden kann, da zum Beispiel von der Sensorik ein Gang A nicht von einem Gang B unterschieden werden kann. Der Roboter könnte also gewissermaßen davon ausgehen, dass er an einer entsprechenden Position bereits einmal war und eine entsprechende Ausgleichstransformation als *Loop-Closure* durchführen. Dieses falsch-positive Ergebnis kann zu fehlerhaften und sogar unbrauchbaren Karten führen. Dieses Problem kann bei dem vorgeschlagenen Verfahren nicht auftreten, da die ortsfesten Marker eindeutig identifizierbar sind und nicht zu falsch-positiven Ergebnissen führen.

In einer bevorzugten Ausgestaltung des vorgeschlagenen Verfahrens wird eine relative Position des Roboters zu dem wenigstens einen ortsfesten Marker bestimmt. Aus dieser relativen Position kann auf die Position des ortsfesten Markers geschlossen werden, sodass gegebenenfalls eine erforderliche Ausgleichstransformation gemäß dem vorgeschlagenen Verfahren durchgeführt werden kann. Es ist also nicht notwendig, dass die absolute Position des ortsfesten Markers bekannt ist. Allein die relative Position des Markers zum Roboter ist bereits ausreichend. Es ist also nicht erforderlich, den oder die ortsfesten Marker zuvor in zeit- und kostenaufwendiger Weise einzumessen. Einzige Voraussetzung ist lediglich, dass die Position(en) des oder der Marker ortsfest sind und sich nicht während des Kartierens verändern.

Als Detektionssysteme kommen im Prinzip alle üblichen und verfügbaren Detektionssysteme in Frage. Beispielsweise können optische Markerdetektionssysteme und/oder funkbasierte Ortungssysteme und/oder nahinfrarotbasierte Kamera-Motion-Tracking-Systeme und/oder Ortungssysteme auf der Basis von Ultraschall oder Radar eingesetzt werden. In besonders einfacher und praktikabler Weise können optische Markerdetektionssysteme verwendet werden, wobei der wenigstens eine Marker ein optischer Marker ist und wobei wenigstens eine Kamera auf oder an dem mobilen Roboter vorgesehen ist, sodass der oder die optischen Marker, beispielsweise ein Barcode, ein QR-Code oder Ähnliches, mittels der oder den Kameras detektiert und identifiziert werden können. In anderen Ausgestaltungen kann die Identifizierung des ortsfesten Markers beispielsweise auf der Basis eines Lasersystems erfolgen, wobei der wenigstens eine Marker ein passiv-reflektierender Marker oder eine aktive Laserquelle sein kann. Je nach Art des Markers ist das Detektionsgegenstück auf dem Roboter entsprechend ausgestaltet. Beispielsweise kann es sich bei einem passivreflektierenden Marker um ein Lasersystem auf dem Roboter handeln oder lediglich um ein Laserdetektionssystem, wenn der Marker selbst eine aktive Laserquelle ist. Das oder die Detektionssysteme auf dem mobilen Roboter können auch so ausgestaltet sein, dass aktive Ultraschall- oder Radarmarker (*beacons*) geortet werden können. Andere Systeme können auf Nahinfrarot basieren, welche anhand von aktiven (z.B. Infrarotlichtquellen) oder passiven (z.B. Reflektoren) Markern eine Positionsbestimmung ermöglichen.

Mit besonderem Vorteil können funkbasierte Ortungssysteme eingesetzt werden. Beispielsweise kann hierfür UWB (Ultrabreitband), RFID (*radio-frequencyidentification*) oder Ähnliches genutzt werden. Mit ganz besonderem Vorteil können als ortsfeste Marker ein oder mehrere Zugangspunkte einer WLAN-Struktur oder einer Mobilfunk-Infrastruktur verwendet werden. Hierfür können insbesondere auch bereits vorhandene Strukturen genutzt werden, die als ortsfeste Marker im Sinne des vorgeschlagenen Verfahrens eingesetzt werden. In besonders bevorzugter Weise kann dabei beispielsweise anhand einer Auswertung einer Laufzeitmessung in Bezug zu zwei oder mehr Zugangspunkten beispielsweise einer WLAN-Struktur die relative Position des Roboters zu den Markern gestimmt werden. Aus dieser relativen Position kann auf die Position des oder der ortsfesten Marker geschlossen werden, sodass auf der Basis dieser Informationen überprüft werden kann, ob eine Abweichung der Position der ortsfesten Marker im Vergleich der aktuellen Kartierung mit einer vorangegangenen Kartierung vorliegt, sodass gegebenenfalls eine Ausgleichstransformation durchgeführt werden kann. Mittels einer Laufzeitmessung kann dabei die Entfernung oder die Richtung einzelner Marker bestimmt werden. Weiterhin kann bei mehreren Marker oder mehreren Messungen eines einzelnen Markers von verschiedenen Positionen aus eine Positionsbestimmung durch Trilateration oder Triangulation durchgeführt werden. Weiterhin kann beispielsweise bei mehreren Zugangspunkten der Zugangspunkt mit der höchsten Empfangsqualität identifiziert werden und als ortsfester Marker als Basis für die Ausgleichstransformation im Rahmen des vorgeschlagenen Verfahrens genutzt werden. In vergleichbarer Weise kann statt einer WLAN-Infrastruktur beispielsweise eine bestehende Mobilfunk-Infrastruktur verwendet werden.

Weiterhin ist es mit besonderem Vorteil möglich, dass die Suche nach bereits vorhandenen Positionen des ortsfesten Markers in einer vorangegangenen Kartierung auf einen Bereich der Kartierung begrenzt wird, der einer Reichweite des Markers bzw. des Zugangspunktes entspricht. Hierdurch kann Rechenkapazität und/oder Rechenzeit eingespart werden. So kann beispielsweise bei einer WLAN-Infrastruktur mit mehreren Zugangspunkten immer nur der Zugangspunkt mit der höchsten Empfangsqualität, in der Regel der nächstgelegene Zugangspunkt, mit seiner Hardware-Identität in der Karte beziehungsweise der Kartierung annotiert werden. Kommt der Zugangspunkt im Laufe der nachfolgenden Kartierung erneut in Empfangsreichweite, muss nur innerhalb eines gewissen Bereiches der Kartierung bzw. der erstellen Karte, der beispielsweise in Form einer Kreisfläche mit dem Radius, der der Reichweite des Zugangspunktes entspricht, nach der bereits kartierten Position des Markers gesucht werden. Weiterhin ist es beispielsweise möglich, dass die bloße Anwesenheit eines Markers im Empfangsbereich als Trigger für eine "Umkreissuche" nach *Loop-Closures* in einem räumlich begrenzten Bereich der Karte, der der Reichweite des Zugangspunktes oder allgemein der Sichtweite des ortsfesten Markers entspricht, genutzt wird, wodurch die Anforderungen an die Rechenkapazitäten erheblich gesenkt beziehungsweise Rechenkapazitäten eingespart werden.

Es kann vorgesehen sein, dass das vorgeschlagene Verfahren unter Nutzung von ortsfesten Markern nur für die Kartierung und nicht für einen reinen Lokalisierungsbetrieb des mobilen Roboters eingesetzt wird. Für den reinen Lokalisierungsbetrieb wird dann die im Rahmen des SLAM-Prozesses erstellte Karte bzw. die bereits erfolgte Kartierung genutzt, ohne dass weitere Anpassungen der Kartierung mehr erfolgen. Die Marker werden dabei also nur für das *Mapping* im Rahmen des SLAM-Prozesses eingesetzt und nicht für die spätere Lokalisierung. Insofern werden dann die ortsfesten Marker nicht mehr benötigt und können nach der eigentlichen Kartierung entfernt oder für andere Zwecke genutzt werden. Darüber hinaus hat dieses Vorgehen den besonderen Vorteil, dass eine Erneuerung von gegebenenfalls abgenutzten Markern entfällt. Bei den ortsfesten Markern, die für das vorgeschlagene Verfahren eingesetzt werden, kann es sich also gewissermaßen um temporäre Marker handeln, die nur für die Zwecke der Kartierung eingesetzt werden, und die für einen späteren reinen Lokalisierungsbetrieb des mobilen Roboters nicht mehr benötigt werden. Es sind somit keine dauerhaften Infrastrukturmaßnahmen für die Durchführung des vorgeschlagenen Verfahrens erforderlich. Wie erwähnt, können jedoch auch dauerhafte Infrastrukturmaßnahmen, wie beispielsweise WLAN-Zugangspunkte, die beispielsweise ohnehin vorhanden sind, für das vorgeschlagene Verfahren mit besonderem Vorteil eingesetzt werden. Es können jedoch auch nur temporär eingesetzte, ortsfeste Marker, wie beispielsweise optische Marker, für die Zwecke der Kartierung im Rahmen des SLAM-Prozesses verwendet werden. So können zum Beispiel Markertechnologien zum Einsatz kommen, die für eine flächendeckende, dauerhafte Installation weniger geeignet sind, beispielsweise wegen hoher Anschaffungskosten, hoher Installations- oder Wartungskosten und/oder wegen hohem Energieverbrauch. Derartige Marker, beispielsweise Ultraschall- oder Radarmarker, die für die Zwecke des vorgeschlagenen Verfahrens eingesetzt werden, können beispielsweise nur in der Anfangszeit des Betriebs eines mobilen Roboters für den SLAM-Prozess gemäß dem vorgeschlagenen Verfahren eingesetzt werden. Sobald das System den erforderlichen SLAM-Prozess durchlaufen hat, können die Marker gegebenenfalls wieder entfernt und/oder anderweitig genutzt werden.

Die Erfindung umfasst weiterhin ein Computerprogramm, das zur Durchführung der Schritte des vorgeschlagenen Verfahrens eingerichtet ist. Weiterhin umfasst die Erfindung ein maschinenlesbares Speichermedium, auf welchem ein solches Computerprogramm gespeichert ist, und ein elektronisches Steuergerät, das zur Durchführung des vorgeschlagenen Verfahrens eingerichtet ist.

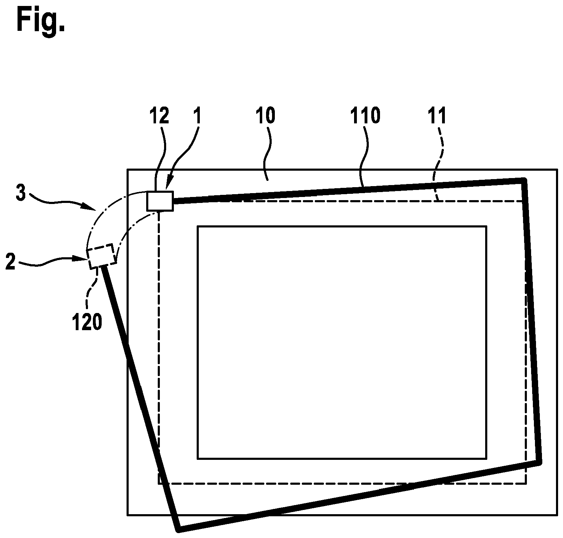

Weitere Merkmale und Vorteile der Erfindung ergeben sich aus der nachfolgenden Beschreibung von Ausführungsbeispielen in Verbindung mit der Zeichnung. Hierbei können die einzelnen Merkmale jeweils für sich oder in Kombination miteinander verwirklicht sein. In der Zeichnung zeigt die Figur ein schematisches Szenario zur Verdeutlichung eines *Loop-Closures* gemäß dem vorgeschlagenen Verfahren.

### Beschreibung von Ausführungsbeispielen

Die **Figur** illustriert ein beispielhaftes Szenario zur Verdeutlichung des vorgeschlagenen Verfahrens. Dargestellt ist ein Gang 10, der in einem geschlossenen Rechteck verläuft. Die gestrichelte Linie 11 illustriert den realen Bewegungspfad eines mobilen Roboters in dem Gang 10. Der mobile Roboter bewegt sich in dem Gang dabei auf der Basis einer simultanen Lokalisierung und Kartierung (SLAM), wobei der Roboter seine Position relativ zu seiner Umgebung bestimmt und auf der Basis von Sensorwerten zu erfassbaren physikalischen Eigenschaften gleichzeitig eine Kartierung der Umgebung erstellt. Aufgrund verschiedener Fehlerquellen kommt es dabei in der Praxis zu einem Driftfehler, sodass der vom Roboter aufgezeichnete Bewegungspfad 110 von dem realen Bewegungspfad 11 abweicht. Insbesondere stimmt dabei der Startpunkt 1 des Roboters nicht mit dem Endpunkt 2 überein. Dieser Driftfehler wird durch eine Ausgleichstransformation 3 ausgeglichen, wobei gemäß dem vorgeschlagenen Verfahren diese Ausgleichstransformation 3 auf der Basis einer Identifizierung eines ortsfesten Markers 12 durchgeführt wird. Wenn also der mobile Roboter das Gangsystem 10 durchläuft und wieder zu dem Punkt kommt, an dem er gestartet ist, detektiert und identifiziert er den Marker 12. Allerdings weicht durch den in der Praxis nahezu unvermeidlichen Driftfehler die am Endpunkt 2 detektierte Position des ortsfesten Markers 12 von der ursprünglichen Position am Start 1 ab, sodass der mobile Roboter den Marker am Endpunkt 2 an der Position 120 sieht. Zum Ausgleich dieses Driftfehlers wird gemäß dem vorgeschlagenen Verfahren eine Ausgleichstransformation 3 vorgenommen, um den Endpunkt 2 in Übereinstimmung mit dem Startpunkt 1 zu bringen (*Loop-Closure*). Die Ausgleichstransformation 3 kann dabei mit verhältnismäßig wenig Rechneraufwand anhand der tatsächlichen Position des ortsfesten Markers 12 berechnet werden.

Dieses vorgeschlagene Verfahren wird im Rahmen einer simultanen Lokalisierung und Kartierung des mobilen Roboters ausgeführt, wobei der Roboter selbst mit einem entsprechenden SLAM-System ausgestattet ist. Gegebenenfalls kann das SLAM-System auch beispielsweise nicht direkt in dem Roboter implementiert sein, sondern beispielsweise auf einen zentralen Rechner, der zur Steuerung des mobilen Roboters vorgesehen ist. Der Roboter ist weiterhin mit einer Detektionseinrichtung oder einem Detektionssystem ausgestattet, um den ortsfesten Marker 12 detektieren und identifizieren zu können. Beispielsweise kann der Roboter mit einer Kamera ausgestattet sein, die den ortsfesten Marker, beispielsweise eine optischen Marker, erkennen kann. In anderen Ausgestaltungen kann der Roboter mit einem Laser-basierten SLAM-System ausgestattet sein. Im Erfassungsbereich des Lasersystems können der oder die ortsfesten Marker als reflektierende Marker realisiert sein, welche von dem verwendeten Lasersystem erkannt werden können. Anhand ihrer Beschaffenheit, beispielsweise einer Retroreflektivität oder Ähnlichem und/oder einer räumlichen Anordnung mehrerer Reflexmarker zueinander, können die Marker eindeutig identifiziert und ihre Position bestimmt werden. Alternativ zu passiven Reflexmarkern können beispielsweise auch aktive Laserlichtquellen als Marker eingesetzt werden.

Mit besonderem Vorteil kann eine bestehende WLAN-Infrastruktur mit beispielsweise mehreren Zugangspunkten als ortsfester Marker 12 genutzt werden, wobei beispielsweise mittels Laufzeitmessung und Trilateration oder Triangulation anhand mehrerer Zugangspunkte, die gleichzeitig in Empfangsreichweite sind, eine Relativposition des Roboters berechnet werden kann.

Das vorgeschlagene Verfahren kann für verschiedene Bereiche der mobilen Robotik genutzt werden, beispielsweise im Bereich der Intralogistik oder in Produktionsumgebungen. Auch für selbstfahrende Fahrzeuge kann das vorgeschlagene Verfahren zum Einsatz kommen, wobei für die Detektion der ortsfesten Marker beispielsweise eine hochgenaue Laserlokalisierung mit Kamera-Marker-basierten Lokalisierungssystemen eingesetzt werden kann.

## Patentansprüche

1. Verfahren zur simultanen Lokalisierung und Kartierung eines mobilen Roboters, wobei die simultane Lokalisierung und Kartierung einen Optimierungsschritt durch Ausgleichstransformationen bei der Detektion von bereits kartierten Strukturen umfasst, **dadurch gekennzeichnet, dass** eine Ausgleichstransformation (3) bei der Kartierung auf der Basis einer Identifizierung wenigstens eines ortsfesten Markers (12) durchgeführt wird, indem bei einer bereits vorhandenen Position des wenigstens einen ortsfesten Markers (12) aus einer vorangegangenen Kartierung und bei einer Abweichung (120) der Position des wenigstens einen ortsfesten Markers bei einer aktuellen Kartierung die Ausgleichstransformation (3) erfolgt.

2. Verfahren nach Anspruch 1, **dadurch gekennzeichnet, dass** eine relative Position des Roboters zu dem wenigstens einen ortsfesten Marker (12) bestimmt wird und dass aus dieser relativen Position auf die Position des ortsfesten Markers geschlossen wird.

3. Verfahren nach einem der vorhergehenden Ansprüche, **dadurch gekennzeichnet, dass** die Identifizierung des ortsfesten Markers (12) auf der Basis eines optischen Markersystems erfolgt, wobei der wenigstens eine ortsfeste Marker (12) ein optischer Marker ist und wobei wenigstens eine Kamera auf oder an dem mobilen Roboter vorgesehen ist.

4. Verfahren nach einem der vorhergehenden Ansprüche, **dadurch gekennzeichnet, dass** die Identifizierung des ortsfesten Markers (12) auf der Basis eines Lasersystems erfolgt, wobei der wenigstens eine ortsfeste Marker (12) ein passiv reflektierender Marker oder eine aktive Laserquelle ist und wobei wenigstens ein Lasersystem und/oder ein Laserdetektionssystem auf oder an dem mobilen Roboter vorgesehen ist.

5. Verfahren nach einem der vorhergehenden Ansprüche, **dadurch gekennzeichnet, dass** als ortsfester Marker (12) ein oder mehrere Zugangspunkte einer WLAN-Struktur oder einer Mobilfunk-Infrastruktur verwendet werden.

6. Verfahren nach Anspruch 5, **dadurch gekennzeichnet, dass** anhand einer Auswertung einer Laufzeitmessung in Bezug zu zwei oder mehr Zugangspunkten die relative Position des Roboters zu den Markern bestimmt wird und aus dieser relativen Position auf die Position des oder der ortsfesten Marker (12) geschlossen wird.

7. Verfahren nach Anspruch 5, **dadurch gekennzeichnet, dass** mehrere Zugangspunkte genutzt werden, wobei derjenige Zugangspunkt mit der höchsten Empfangsqualität identifiziert und als ortsfester Marker (12) als Basis für die Ausgleichstransformation (3) genutzt wird.

8. Verfahren nach einem der Ansprüche 5 bis 7, **dadurch gekennzeichnet, dass** die Suche nach bereits vorhandenen Positionen des ortsfesten Markers (12) aus einer vorangegangenen Kartierung auf einen Bereich der Kartierung begrenzt wird, der einer Reichweite des Zugangspunktes entspricht.

9. Verfahren nach einem der vorhergehenden Ansprüche, **dadurch gekennzeichnet, dass** der wenigstens eine ortsfeste Marke (12) nicht für einen reinen Lokalisierungsbetrieb des mobilen Roboters verwendet wird.

10. Computerprogramm, welches eingerichtet ist, die Schritte eines Verfahrens gemäß einem der Ansprüche 1 bis 9 durchzuführen.

11. Maschinenlesbares Speichermedium, auf welchem ein Computerprogramm nach Anspruch 10 gespeichert ist.

12. Elektronisches Steuergerät, das eingerichtet ist, die Schritte eines Verfahrens gemäß einem der Ansprüche 1 bis 9 durchzuführen.
